Europäisches Patentamt

European Patent Office

Office européen des brevets

(19)

(11) Publication number: **0 367 014 B1**

# EUROPEAN PATENT SPECIFICATION

(45) Date of publication of patent specification: **02.08.95**  (51) Int. Cl.6: **B29C 71/00**, C08G 18/10, C08G 18/32

(21) Application number: **89119214.8**

(22) Date of filing: **17.10.89**

(54) **Shape memory hollow body and method of working the same.**

(30) Priority: **18.10.88 JP 260491/88**

(43) Date of publication of application:
**09.05.90 Bulletin 90/19**

(45) Publication of the grant of the patent:
**02.08.95 Bulletin 95/31**

(84) Designated Contracting States:
**BE CH DE FR GB IT LI NL SE**

(56) References cited:
**DE-A- 1 704 160**
**FR-A- 1 534 052**
**FR-A- 1 549 412**
**US-A- 3 624 045**

**PATENT ABSTRACTS OF JAPAN, vol. 11, no. 163 (C-424)[2610], 26th May 1987; & JP-A-61 293214**

(73) Proprietor: **MITSUBISHI JUKOGYO KABUSHIKI KAISHA**
**5-1, Marunouchi 2-chome**
**Chiyoda-ku**
**Tokyo 100 (JP)**

(72) Inventor: **Shimizu Makoto Nagoya Technical Inst. Mitsubishi Jukogyo K.K.**
**1, Aza-Takamichi**
**Iwatsuka-cho**
**Nakamura-ku**
**Nagoya**
**Aichi Pref. (JP)**
Inventor: **Hayashi Shunichi Nagoya Technical Inst. Mitsubishi Jukogyo K.K.**
**1, Aza-Takamichi**
**Iwatsuka-cho**
**Nakamura-ku**
**Nagoya**
**Aichi Pref. (JP)**

(74) Representative: **Dr. Fuchs, Dr. Luderschmidt Dr. Mehler, Dipl.-Ing Weiss Patentanwälte**
**Postfach 46 60**
**D-65036 Wiesbaden (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a hollow body molded from a thermoplastic polyurethane elastomer having the shape memory function and also to a method of working the same.

Polyurethane having a glass transition point as low as about -40°C exhibits a low modulus even at low temperatures and hence can be used in the application areas for ordinary natural rubber and synthetic rubber. On the other hand, polyurethane having a glass transition point as high as about 100-110°C exhibits a high modulus and good abrasion resistance even at high temperatures and hence finds use as a raw material for artificial wood. ("Glass transition point" will be referred to as Tg hereinafter.)

US-A-3 624 045 describes a class of thermoplastic polyurethane rubbers having heat-activated dimensional memory characteristics. Cross-linking of thermoplastic urethanes is carried out both by chemical means and by high-energy radiation.

Meanwhile, the present inventors have proposed a shape memory polyurethane elastomer (in Japanese Patent Laid-open No. 293214/1986) . It provides a molding which takes on an as-molded shape and deformed shape when it is heated or cooled to a proper temperature. In other words, the molding takes on a deformed shape when it is deformed at a temperature lower than the molding temperature and then cooled to a temperature below Tg while being kept deformed, so that the deformation is set. The deformed molding restores its original shape when it is heated to a temperature higher than Tg and lower than the molding temperature.

The reference cited above discloses two kinds of shape memory polyurethane elastomers. One is composed of an isophorone-based isocyanate, a polyol, and an adduct of trimethylol propane with tolylene diisocyanate (as a chain extender). The other is composed of 2,4-tolylene diisocyanate, a polyol, and 1,4-butanediol (as a chain extender).

These polyurethane elastomers contain a large amount of excess NCO groups at the terminals of the polymer molecules so that they exhibit rubber elasticity at a temperature higher than the Tg. In addition, the first one has crosslinkage formed by a trifunctional chain extender. Polyurethane elastomers having crosslinkage resemble a thermosetting polymer and hence are limited in the freedom of fabrication. That is, they are very difficult to process by injection molding, extrusion molding, blow molding, or the like.

It is an object of the present invention to provide a hollow body molded from a shape memory polyurethane elastomer which is thermoplastic and capable of melt molding (such as injection molding and extrusion molding) and exhibits rubber elasticity at temperatures higher than its Tg approximate to room temperature. It is another object of the present invention to provide a method of working said hollow body.

The first aspect of the present invention resides in a shape memory hollow body which is molded from a thermoplastic polyurethane elastomer produced by prepolymer process from a raw material composed of a difunctional diisocyanate, difunctional polyol, and difunctional chain extender which is different from the polyol containing active hydrogen in a molar ratio of 2.00-1.10 : 1.00 : 1.00-0.10, said polyurethane elastomer containing NCO groups and OH groups in equal amounts at the terminals of the polymer chains, having a glass transition point in the range of -50 to 60°C, a crystallinity of 3 to 50 wt% and a value of the ratio of the tensile modulus at temperatures 10°C lower than the glass transition point to the tensile modulus at temperatures 10°C higher than the glass transition point $E/E'$ is 18-170, said hollow body remembering its asmolded basic shape but taking on a deformed shape which is given when it is deformed at a temperature higher than the glass transition point of the polymer and lower than the molding temperature and then set when it is cooled in the deformed state to a temperature lower than the glass transition point.

The second aspect of the present invention resides in a method of working the above-mentioned shape memory hollow body remembering its basic shape, said method comprising the steps of deforming the hollow body at a temperature higher than the glass transition point and lower than the molding temperature and then cooling it in the deformed state to a temperature lower than the glass transition point, thereby setting it in the deformed state, combining the deformed hollow body with another member, and heating the combination to a temperature higher than the glass transition point, thereby causing it to restore its basic shape and achieving firm bonding of the hollow body to the member.

Fig. 1 is a schematic drawing showing the steps of fitting an inner pipe of shape memory polyurethane elastomer into a pipe.

Fig. 2 is a sectional view showing the joining of a shape memory hollow body to a pipe.

The conventional shape memory polyurethane elastomer molding depends on rigid allophanate linkages for its rubber elasticity at a temperature higher than its Tg. The allophanate linkages result from the intermolecular crosslinking which takes place when excess terminal NCO groups react with urethane linkages. By contrast, the shape memory polyurethane elastomer in the present invention is a thermoplastic

2

chain polymer which is composed of a difunctional isocyanate, polyol, and chain extender according to a specific formulation but contains no excess terminal NCO groups. It is characterized by a specific crystallinity, a Tg approximate to room temperature, and a specific ratio of moduli measured at temperatures above and below the Tg. This polyurethane elastomer has the partial crystallization instead of the intermolecular crosslinking. Therefore, it is a thermoplastic polymer of chain structure; nevertheless, it exhibits rubber elasticity at a temperature higher than its Tg and takes on the as-molded shape and deformed shape at temperatures above and below its Tg. In other words, it has the shape memory function. This thermoplastic polyurethane elastomer can be easily molded into a hollow body by melt molding such as injection molding and extrusion molding.

The thermoplastic polyurethane elastomer in the present invention should preferably have a crystallinity in the range of 3 to 50 wt%. With a crystallinity lower than 3 wt%, the polymer will have a low rubber elasticity at a temperature higher than its Tg. Conversely, with a crystallinity higher than 50 wt%, the polymer will have a high rubber elasticity at a temperature higher than its Tg, with the result that the ratio of moduli at temperatures $10°C$ above and below its Tg is smaller.

The polyurethane polymer in the present invention is produced from the following raw materials, which are illustrative only and not limitative.

The first raw material is a difunctional isocyanate which is represented by the general formula OCN-R-NCO, where R is a group having no or one or two benzene rings. It includes, for example, 2,4-toluene diisocyanate, 4,4'-diphenylmethane diisocyanate, carbodiimide-modified 4,4'-diphenylmethane diisocyanate, and hexamethylene diisocyanate.

The second raw material is a difunctional polyol which is represented by the general formula OH-R'-OH, where R' is a group having no or one or two benzene rings. The second raw material may also be a reaction product of said difunctional polyol and a difunctional carboxylic acid or cyclic ether. It includes, for example, polypropylene glycol, 1,4-butane glycol adipate, polytetramethylene glycol, polyethylene glycol, and an adduct of bisphenol-A with propylene oxide.

The third raw material is a difunctional chain extender containing active hydrogen which is represented by the general formula OH-R''-OH, where R'' is a $(CH_2)_n$ group or a group having one or two benzene rings and where n is a positive integer. It includes, for example, ethylene glycol, 1,4-butane glycol, bis(2-hydroxyethyl)hydroquinone, an adduct of bisphenol-A with ethylene oxide, and an adduct of bisphenol-A with propylene oxide.

The following illustrates the production of the shape memory polyurethane elastomer. First, a prepolymer is prepared by reacting, in the absence of catalyst, an isocyanate component and a polyol component in the ratio shown in Table 1. To the prepolymer is added a chain extender in the ratio shown in Table 1. The resulting mixture is heat-cured to give the shape memory polyurethane elastomer, which has the basic physical properties as shown in Table 1.

In Table 1, Tg represents the glass transition point ($°C$) and E/E' represents the ratio of the tensile modulus at a temperature $10°C$ lower than the Tg to the tensile modulus at a temperature $10°C$ higher than the Tg. The crystallinity (wt%) was measured by X-ray diffractometry.

The hollow body pertaining to the present invention is made of the above-mentioned shape memory polyurethane elastomer. It remembers its basic shape when it is molded. It is given its second shape (deformed shape) when it is deformed at a temperature higher than its Tg and lower than its molding temperature and then cooled in the deformed state to a temperature lower than its Tg. Subsequently, the deformed hollow body is combined with another member, and the combination is heated to a temperature higher than its Tg, so that the hollow body restores its basic shape, firmly joining itself to the member.

Table 1

| Raw materials and molar ratio | | M.W. | 1 | 2 | 3 | 4 | 5 | 6 | 7 | 8 | 9 | 10 |
|---|---|---|---|---|---|---|---|---|---|---|---|---|
| Diisocyanate | 2,4-toluene diisocyanate | 174 | 1.5 | | | 1.5 | | | | | | |
| | 4,4'-diphenylmethane diisocyanate | 250 | | | | | 1.5 | | | 1.5 | 1.5 | 1.5 |
| | 4,4'-diphenylmethane diisocyanate (carbodiimide-modified) | 290 | | | | | | 1.5 | | | | |
| | ditto | 303 | | 1.5 | 1.5 | | | | | | | |
| | hexamethylene diisocyanate | 168 | | | | | | | 1.5 | | | |
| Polyol | polypropylene glycol | 400 | | | | | | | | | | |
| | ditto | 700 | | | 1.0 | 1.0 | 1.0 | 1.0 | 1.0 | 1.0 | 1.0 | 1.0 |
| | ditto | 1000 | | 0.88 | | | | | | | | |
| | 1,4-butaneglycol adipate | 600 | | | | | | | | | | |
| | ditto | 1000 | | | | | | | | | | |
| | ditto | 2000 | | | | | | | | | | |
| | polytetramethylene glycol | 650 | | | | | | | | | | |
| | ditto | 850 | | | | | | | | | | |
| | ditto | 1000 | | | | | | | | | | |
| | polyethylene glycol | 600 | | | | | | | | | | |
| | bisphenol-A + propylene oxide | 800 | 1.0 | | | | | | | | | |
| Chain extender | ethylene glycol | 62 | | | | | | | | 0.51 | | |
| | 1,4-butane glycol | 90 | 0.51 | | | | | | | | 0.51 | |
| | bis(2-hydroxyethyl)hydroquinone | 198 | | | | | | | | | | |
| | bisphenol-A + ethylene oxide | 327 | | | | | | | | | | |
| | ditto | 360 | | 0.51 | 0.51 | 0.51 | 0.51 | 0.51 | 0.51 | | | |
| | bisphenol-A + propylene oxide | 360 | | | | | | | | | | 0.51 |
| Measured values of physical properties | Tg (°C) | | 24 | -10 | 15 | -11 | 14 | 16 | -45 | 9 | 6 | 12 |
| | E/E' | | 170 | 73 | 69 | 23 | 129 | 133 | 20 | 117 | 128 | 97 |
| | Crystallinity (wt%) | | | 20 | 20 | 30 | | | 25 | | | |

EP 0 367 014 B1

Table 1 (continued)

| Raw materials and molar ratio | | M.W. | 11 | 12 | | 14 | 15 | 16 | 17 | 18 | 19 | 20 |
|---|---|---|---|---|---|---|---|---|---|---|---|---|
| Diisocyanate | 2,4-toluene diisocyanate | 174 | | | | | | | | | | |
| | 4,4'-diphenylmethane diisocyanate | 250 | 1.5 | 1.5 | | 1.2 | 1.8 | 1.35 | 1.35 | 1.35 | 1.35 | 1.35 |
| | 4,4'-diphenylmethane diisocyanate (carbodiimide-modified) | 290 | | | | | | | | | | |
| | ditto | 303 | | | | | | | | | | |
| | hexamethylene diisocyanate | 168 | | | | | | | | | | |
| Polyol | polypropylene glycol | 400 | | | | | | | | | | |
| | ditto | 700 | 1.0 | 1.0 | | 1.0 | 1.0 | 1.0 | | | | |
| | ditto | 1000 | | | | | | | 1.0 | | | |
| | 1,4-butaneglycol adipate | 600 | | | | | | | | 1.0 | | |
| | ditto | 1000 | | | | | | | | | 1.0 | |
| | ditto | 2000 | | | | | | | | | | 1.0 |
| | polytetramethylene glycol | 650 | | | | | | | | | | |
| | ditto | 850 | | | | | | | | | | |
| | ditto | 1000 | | | | | | | | | | |
| | polyethylene glycol | 600 | | | | | | | | | | |
| | bisphenol-A + propylene oxide | 800 | | | | | | | | | | |
| Chain extender | ethylene glycol | 62 | | | | | | | | | | |
| | 1,4-butane glycol | 90 | | | | | | | | | | |
| | bis(2-hydroxyethyl)hydroquinone | 198 | | 0.51 | | | | | | | | |
| | bisphenol-A + ethylene oxide | 327 | 0.51 | | | 0.21 | 0.81 | 0.36 | 0.36 | 0.36 | 0.36 | 0.36 |
| | ditto | 360 | | | | | | | | | | |
| | bisphenol-A + propylene oxide | 360 | | | | | | | | | | |
| Measured values of physical properties | Tg (°C) | | 16 | −7 | | −4 | 25 | 5 | −22 | 10 | −18 | −45 |
| | E/E' | | 111 | 49 | | 105 | 53 | 37 | 81 | 100 | 29 | 30 |
| | Crystallinity (wt%) | | | 20 | | | 20 | 25 | | | 25 | 25 |

Table 1  (continued)

| Raw materials and molar ratio | | M.W. | 21 | 22 | 23 | 24 | 25 | 26 | 27 | 28 | 29 | 30 |
|---|---|---|---|---|---|---|---|---|---|---|---|---|
| Diisocyanate | 2,4-toluene diisocyanate | 174 | | | | | | | 1.5 | 1.4 | 1.3 | 1.2 |
| | 4,4'-diphenylmethane diisocyanate | 250 | 1.35 | 1.35 | 1.35 | 1.5 | 1.5 | 1.35 | | | | |
| | 4,4'-diphenylmethane diisocyanate (carbodiimide-modified) | 290 | | | | | | | | | | |
| | ditto | 303 | | | | | | | | | | |
| | hexamethylene diisocyanate | 168 | | | | | | | | | | |
| Polyol | polypropylene glycol | 400 | | | | | | 1.0 | | | | |
| | ditto | 700 | | | | 1.0 | 1.0 | | | | | |
| | ditto | 1000 | | | | | | | | | | |
| | 1,4-butaneglycol adipate | 600 | | | | | | | | | | |
| | ditto | 1000 | | | | | | | | | | |
| | ditto | 2000 | | | | | | | | | | |
| | polytetramethylene glycol | 650 | 1.0 | | | | | | | | | |
| | ditto | 850 | | 1.0 | | | | | | | | |
| | ditto | 1000 | | | 1.0 | | | | | | | |
| | polyethylene glycol | 600 | | | | | | | | | | |
| | bisphenol-A + propylene oxide | 800 | | | | | | | 1.0 | 1.0 | 1.0 | 1.0 |
| Chain extender | ethylene glycol | 62 | | | | | | | | | | |
| | 1,4-butane glycol | 90 | | | | | | | | | | |
| | bis(2-hydroxyethyl)hydroquinone | 198 | | | | | | | 0.51 | 0.41 | 0.31 | 0.21 |
| | bisphenol-A + ethylene oxide | 327 | 0.36 | 0.36 | 0.36 | 0.43 | 0.35 | 0.36 | | | | |
| | ditto | 360 | | | | | | | | | | |
| | bisphenol-A + propylene oxide | 360 | | | | | | | | | | |
| Measured values of physical properties | Tg (˚C) | | −18 | −30 | −38 | 5 | 8 | 23 | 26 | 21 | 19 | 19 |
| | E/E' | | 33 | 18 | 40 | 33 | 100 | 126 | 140 | 125 | 108 | 101 |
| | Crystallinity (wt%) | | 25 | 25 | | 25 | 15 | 15 | 10 | 15 | 15 | 15 |

Table 1 (continued)

| Raw materials and molar ratio | | M.W. | 31 | 32 | 33 | 34 | 35 | 36 | 37 | 38 | 39 | 40 |
|---|---|---|---|---|---|---|---|---|---|---|---|---|
| Diisocyanate | 2,4-toluene diisocyanate | 174 | | | 1.5 | | | | | | | |
| | 4,4'-diphenylmethane diisocyanate | 250 | 1.59 | 1.68 | | 1.3 | 1.7 | 1.59 | 1.68 | 1.5 | 1.5 | 1.81 |
| | 4,4'-diphenylmethane diisocyanate (carbodiimide-modified) | 290 | | | | | | | | | | |
| | ditto | 303 | | | | | | | | | | |
| | hexamethylene diisocyanate | 168 | | | | | | | | | | |
| Polyol | polypropylene glycol | 400 | | | | | | | | | | |
| | ditto | 700 | 1.0 | 1.0 | | 1.0 | 1.0 | 1.0 | 1.0 | | | |
| | ditto | 1000 | | | | | | | | | | |
| | 1,4-butaneglycol adipate | 600 | | | | | | | | | | |
| | ditto | 1000 | | | | | | | | | | |
| | ditto | 2000 | | | | | | | | | | |
| | polytetramethylene glycol | 650 | | | | | | | | | | |
| | ditto | 850 | | | | | | | | | | |
| | ditto | 1000 | | | | | | | | | | |
| | polyethylene glycol | 600 | | | | | | | | | | |
| | bisphenol-A + propylene oxide | 800 | | | 1.0 | | | | | 1.0 | 1.0 | 1.0 |
| Chain extender | ethylene glycol | 62 | | | | 0.31 | 0.71 | 0.51 | 0.51 | | | |
| | 1,4-butane glycol | 90 | | | | | | | | 0.51 | | |
| | bis(2-hydroxyethyl)hydroquinone | 198 | | | 0.51 | | | | | | 0.51 | 0.81 |
| | bisphenol-A + ethylene oxide | 327 | | | | | | | | | | |
| | ditto | 360 | 0.51 | 0.51 | | | | | | | | |
| | bisphenol-A + propylene oxide | 360 | | | | | | | | | | |
| Measured values of physical properties | Tg (°C) | | 10 | 11 | 22 | 2 | 15 | 11 | 12 | 35 | 40 | 48 |
| | E/E' | | 126 | 126 | 107 | 83 | 122 | 100 | 135 | 124 | 138 | 152 |
| | Crystallinity (wt%) | | 15 | 20 | 15 | 20 | 15 | 15 | 10 | 10 | 5 | 5 |

EXAMPLES

The invention will be described in more detail with reference to the following examples, which are not intended to restrict the scope of the invention.

7

Example 1

In this example, a hollow body (inner pipe) made of the shape memory polyurethane elastomer was fitted into an outer pipe according to the following procedure.

First, a polymer having a Tg of 48°C was prepared by prepolymer process according to the formulation of sample No. 40 shown in Table 1. The polymer was made into a cylindrical hollow body *1a* having an outside diameter of 10.4 cm and a wall thickness of 5 mm by extrusion molding.

This cylindrical hollow body *1a* was heated to about 65°C and then collapsed by pressing. It was cooled to about 40°C in the collapsed state so that it was set deformed. Thus there was obtained a collapsed hollow body *1b*.

The collapsed hollow body *1b* was inserted into a steel pipe *2* having an inside diameter of 10 cm. (The resulting combination is indicated by *3a*.)

The collapsed hollow body *1b* inserted into the steel pipe *3a* was heated by blowing hot air (about 65°C), so that it restored its original cylindrical shape. Thus there was obtained a composite pipe *3b* composed of a steel pipe *2* and a cylindrical hollow body *1a* of polyurethane elastomer which was firmly bonded to the inside of the steel pipe.

This example shows that the use of the shape memory function overcomes the difficulty which was encountered in the past when the inside of a small steel pipe was coated with a polyurethane elastomer.

Example 2

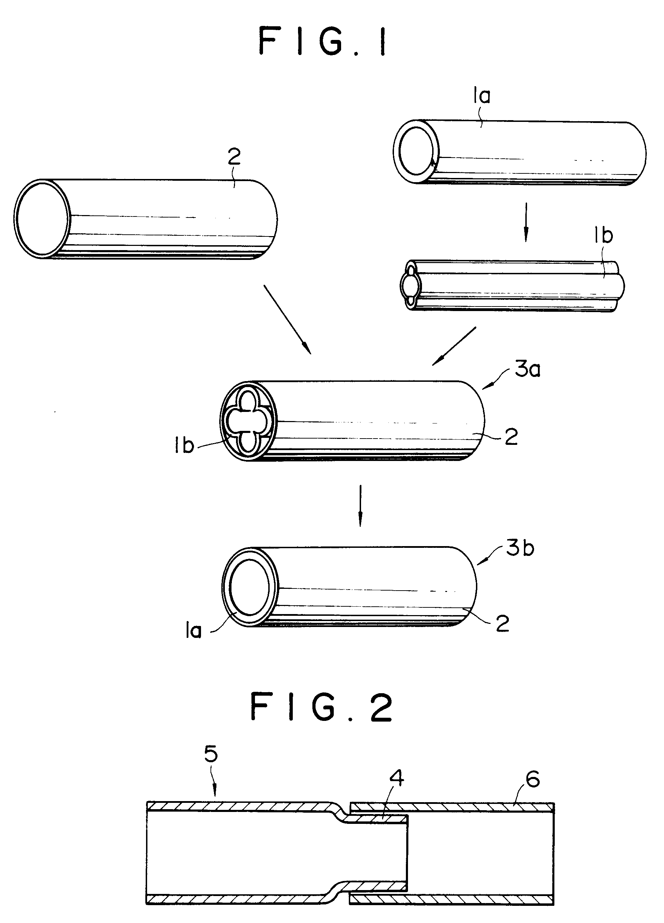

In this example, a pipe made of the shape memory polyurethane elastomer was joined to another pipe as shown in Fig. 2.

A polymer having a Tg of 40°C was prepared by prepolymer process according to the formulation of sample No. 39 shown in Table 1. The polymer was molded into a straight pipe (not shown) having an outside diameter of 5 cm and a wall thickness of 3 mm. This straight pipe remembers its as-molded shape. The end *4* (3 cm long) of the pipe was heated to about 60°C and then contracted until the outside diameter was 4 cm. The pipe was cooled to about 35°C, with the end contracted, so that the contracted shape was set. Thus there was obtained a pipe *5* as shown in Fig. 2.

The end *4* of the pipe *5* was inserted into a pipe *6* having an inside diameter of 4.5 cm. When they are heated to about 60°C, the end of the pipe *5* restored its original shape, joining itself firmly to the inside of the pipe *6*. The above-mentioned joining procedure may be applied to joining an elbow made of shape memory polymer to a steel pipe.

As the above-mentioned examples show, the thermoplastic polyurethane elastomer having the shape memory function can be molded into a hollow body of any shape by melt molding such as injection molding, extrusion molding, and blowing molding.

In addition, the shape memory hollow body of the present invention remembers its basic shape, takes on its second shape (e.g., reduced or enlarged diameter, and bending), and restores its basic shape after it has been combined with another member. This property makes it possible to join the hollow body firmly to another member.

**Claims**

1. A shape memory hollow body which is molded from a thermoplastic polyurethane elastomer produced by prepolymer process from a raw material composed of a difunctional diisocyanate, difunctional polyol, and difunctional chain extender which is different from the polyol containing active hydrogen in a molar ratio of 2.00-1.10 : 1.00 : 1.00-0.10, said polyurethane elastomer containing NCO groups and OH groups in almost equal amounts at the terminals of the polymer chains, having a glass transition point in the range of -50 to 60°C, a crystallinity of 3 to 50 wt% and a value of the ratio of the tensile modulus at temperatures 10°C lower than the glass transition point to the tensile modulus at temperatures 10°C higher than the glass transition point E/E' is 18-170, said hollow body remembering its asmolded basic shape but taking on a deformed shape which is given when it is deformed at a temperature higher than the glass transition point of the polymer and lower than the molding temperature and then set when it is cooled in the deformed state to a temperature lower than the glass transition point.

2. The shape memory hollow body as claimed in Claim 1, wherein the difunctional diisocyanate is one which is represented by the general formula OCN-R-NCO, where R is a group having one or two benzene rings.

3.  The shape memory hollow body as claimed in Claim 1, wherein the difunctional polyol is one which is represented by the general formula HO-R'-OH, where R' is a group having one or two benzene rings.

4.  The shape memory hollow body as claimed in Claim 1, wherein the difunctional chain extender containing active hydrogen which is represented by the general formula HO-R''-OH, where R'' is a $(CH_2)_n$ group [where n is a positive integer] or a group having one or two benzene rings.

5.  A method of working the shape memory hollow body remembering its basic shape as claimed in Claim 1, said method comprising the steps of deforming the hollow body at a temperature higher than the glass transition point and lower than the molding temperature and then cooling it in the deformed state to a temperature lower than the glass transition point, thereby setting it in the deformed state, combining the deformed hollow body with another member, and heating the combination to a temperature higher than the glass transition point, thereby causing it to restore its basic shape and achieving firm bonding of the hollow body to the member.

**Patentansprüche**

1.  Hohlkörper mit Formgedächtnis, der aus einem thermoplastischen Polyurethanelastomer geformt ist, das nach einem Prepolymer-Verfahren aus einem Rohmaterial, das aus einem difunktionellen Diisocyanat, einem difunktionellen Polyol und einem von dem Polyol verschiedenen, aktiven Wasserstoff enthaltenden, difunktionellen Kettenverlängerer in einem Molverhältnis von 2,00 - 1,10 : 1,00 : 1,00 - 0,10 besteht, hergestellt ist, wobei das Polyurethanelastomer an den Enden der Polymerketten NCO-Gruppen und OH-Gruppen in etwa gleichen Mengen enthält sowie einen Glasübergangspunkt von -50 bis 60°C, eine Kristallinität von 3 bis 50 Gew.-% und einen Wert des Verhältnisses des Zugmoduls bei Temperaturen 10°C niedriger als der Glasübergangspunkt zu dem Zugmodul bei Temperaturen 10°C höher als der Glasübergangspunkt E/E' von 18 - 170 aufweist, und wobei sich der Hohlkörper seine wie-geformte Grundgestalt merkt, aber eine verformte Gestalt annimmt, die sich ergibt, wenn er bei einer Temperatur höher als der Glasübergangspunkt des Polymers und niedriger als die Verformungstemperatur verformt wird und dann beim Abkühlen in verformter Gestalt auf eine Temperatur niedriger als der Glasübergangspunkt erstarrt.

2.  Hohlkörper mit Formgedächtnis nach Anspruch 1, bei dem das difunktionelle Diisocyanat eines ist, das durch die allgemeine Formel OCN-R-NCO, worin R eine ein oder zwei Benzolringe aufweisende Gruppe bedeutet, dargestellt wird.

3.  Hohlkörper mit Formgedächtnis nach Anspruch 1, bei dem das difunktionelle Polyol eines ist, das durch die allgemeine Formel HO-R'-OH, worin R eine ein oder zwei Benzolringe aufweisende Gruppe bedeutet, dargestellt wird.

4.  Hohlkörper mit Formgedächtnis nach Anspruch 1, bei dem der aktiven Wasserstoff enthaltende, difunktionelle Kettenverlängerer durch die allgemeine Formel HO-R''-OH, worin R'' eine $(CH_2)_n$-Gruppe [worin n eine positive ganze Zahl bedeutet] oder eine ein oder zwei Benzolringe aufweisende Gruppe bedeutet, dargestellt wird.

5.  Verfahren zur Verarbeitung des sich seine Grundgestalt merkenden Hohlkörpers mit Formgedächtnis nach Anspruch 1, umfassend die Schritte des Verformens des Hohlkörpers bei einer Temperatur höher als der Glasübergangspunkt und niedriger als die Verformungstemperatur, des anschließenden Abkühlens desselben in verformter Gestalt auf eine Temperatur niedriger als der Glasübergangspunkt, wobei er auf diese Weise in der verformten Gestalt erstarrt, des Kombinierens des verformten Hohlkörpers mit einem anderen Teil und des Erwärmens der Kombination auf eine Temperatur höher als der Glasübergangspunkt, wobei auf diese Weise bewirkt wird, daß er seine Grundgestalt wieder annimmt und eine feste Haftung des Hohlkörpers an dem Teil erreicht wird.

**Revendications**

1. Corps creux à mémoire de forme qui est moulé à partir d'un élastomère de polyuréthanne thermoplastique produit par un procédé de prépolymérisation à partir d'une matière brute composée d'un diisocyanate bifonctionnel, d'un polyol bifonctionnel et d'un extenseur de chaîne bifonctionnel qui est différent du polyol et qui contient des hydrogènes actifs, suivant un rapport de 2,00-1,10:1,00:1,00-0,10, l'élastomère de polyuréthanne contenant des radicaux NCO et des radicaux OH en quantités presque égales, aux terminaisons des chaînes polymères, ayant un point de transition vitreuse dans l'intervalle de - 50 à 60°C, une cristallinité de 3 à 50% en poids et une valeur du rapport E/E' du module en traction à des températures de 10°C inférieures au point de transition vitreuse au module en traction à des températures de 10°C supérieures au point de transition vitreuse de 18 à 170, le corps creux se remémorant sa forme de base telle que moulée, mais prenant une forme déformée qui est donnée lorsqu'il est déformé à une température supérieure au point de transition vitreuse du polymère et inférieure à la température de moulage et ensuite refroidi à l'état déformé jusqu'à une température inférieure au point de transition vitreuse.

2. Corps creux à mémoire de forme suivant la revendication 1, dans lequel le diisocyanate bifonctionnel est représenté par la formule générale OCN-R-NCO, où R est un radical ayant un ou deux cycles benzéniques.

3. Corps creux à mémoire de forme suivant la revendication 1, dans lequel le polyol bifonctionnel est représenté par la formule générale HO-R'-OH, où R' est un radical ayant un ou deux cycles benzéniques.

4. Corps creux à mémoire de forme suivant la revendication 1, dans lequel l'extenseur de chaîne bifonctionnel contenant des hydrogènes actifs est représenté par la formule générale HO-R''-OH, où R'' est un radical $(CH_2)_n$ (où n est un entier positif) ou un radical ayant un ou deux cycles benzéniques.

5. Procédé de mise en oeuvre du corps creux à mémoire de forme se remémorant de sa forme de base suivant la revendication 1, le procédé comprenant les étapes de déformation du corps creux à une température supérieure au point de transition vitreuse et inférieure à la température de moulage et ensuite, de refroidissement de celui-ci à l'état déformé jusqu'à une température inférieure au point de transition vitreuse, pour ainsi le maintenir à l'état déformé, de combinaison du corps creux déformé avec un autre élément et de chauffage de la combinaison jusqu'à une température supérieure au point de transition vitreuse, pour provoquer ainsi la restauration de sa forme de base et réaliser la ferme liaison du corps creux à l'élément.

# F I G . I

# F I G . 2